# EUROPEAN PATENT APPLICATION

(11) **EP 4 001 201 A1**
(43) Date of publication of application: **25.05.2022**
(21) Application number: 21185959.0
(22) Date of filing: 15.07.2021
(51) Int. Cl.: B66D 1/12, B66D 1/46

(54) **INTEGRATED VEHICLE WINCH SYSTEM**

(30) Priority: 12.11.2020 US 202017096672
(71) Applicant: Rivian IP Holdings, LLC, Plymouth MI 48170 (US)
(72) Inventor: LOBO, Kyle Royston, La Mirada, 90638 (US); FEINBERG, Glenn, Irvine, 92614 (US); TOGAMI, Steven, San Diego, 92129 (US); NIZZA, Jordan, Waterford, 48329 (US)
(74) Representative: Jones, David Alan

(57) **Abstract**

A vehicle (100), or control system (200) thereof includes a winch (110) and control circuitry (231). The winch includes a winch motor (251) and is configured to extend and retract a cable. The control circuitry is coupled to the winch and a battery system (280). The control circuitry is configured to control operation of the vehicle, receive an indication to initiate a winch control mode (302), determine status information for the vehicle (304), and activate one or more selectors of an input interface (306) for receiving input to control the winch based on the status information. The selectors can include buttons of a keyfob (151) associated with the vehicle. The status information can include a gear selection of the vehicle, a security status of the vehicle, a capacity status of the battery system, authorization information, or other information. The control circuitry, while controlling the winch, receives commands for controlling the winch and monitors the status information.

## Description

### INTRODUCTION

The present disclosure is directed towards an integrated vehicle winch system, and more particularly towards a repurposed interface for controlling a vehicle winch system.

### SUMMARY

In some embodiments, the present disclosure is directed to a vehicle that includes a battery system, a winch, and control circuitry. The battery system is configured to provide electric power to the vehicle and subsystems of the vehicle. The winch includes a winch motor and is configured to extend and retract a cable. The control circuitry is coupled to the winch and the battery system, and is configured to control operation of the vehicle, receive an indication to initiate a winch control mode, determine status information for the vehicle, and activate one or more selectors of an input interface for receiving input to control the winch based on the status information. In some embodiments, the control circuitry is further configured to receive the indication from a keyfob associated with the vehicle. In some such embodiments, the keyfob includes the one or more selectors, and the control circuitry is further configured to map at least one command for controlling the winch to the one or more selectors.

In some embodiments, the vehicle includes a current sensor configured to determine a current draw of the winch, and the control circuitry is configured to monitor the current draw. In some such embodiments, the control circuitry is further configured to deactivate the winch based at least in part on the current draw.

In some embodiments, the input interface is configured to receive a first indication to control a first subsystem and, in response to the first indication, generates a first command to control the first subsystem. The control circuitry is further configured to repurpose the input interface to receive the input to control the winch and, in response to the input at the one or more selectors, generates a command to control the winch. For example, in some embodiments, the input interface include a keyfob and the control circuitry repurposes buttons of the keyfob from controlling locking/unlocking doors of the vehicle to controlling the winch when winch control mode is activated.

In some embodiments, the vehicle includes at least one electrical disconnect that is configured to connect and disconnect the winch motor from the battery system. In some such embodiments, the control circuitry is configured to control the at least one electrical disconnect. In some embodiments, the control circuitry includes a motor drive configured to control current flow to the winch motor.

In some embodiments, the status information includes at least one of a gear selection of the vehicle, a security status of the vehicle, a capacity status of the battery system, authorization information, user information, any other suitable information, or any combination thereof.

In some embodiments, control circuitry includes a vehicle control unit configured to control operation of a drivetrain of the vehicle, a winch control unit configured to control operation of the winch motor, and a gateway configured to receive signals from a keyfob associated with the vehicle.

In some embodiments, the present disclosure is directed to a system for controlling a winch system of a vehicle. The system includes a winch, an input interface, and control circuity. The winch includes a winch motor and is configured to extend and retract a cable, the input interface is configured to receive user input.

The control circuitry is coupled to the winch, the input interface, and a power supply. The control circuitry is configured to control operation of the vehicle, receive an indication to initiate a winch control mode, determine status information for the vehicle, and activate one or more selectors of the input interface for receiving input to control the winch based on the status information. In some embodiments, the control circuitry includes a motor drive configured to control current flow to the winch motor. In some embodiments, the input interface is configured to receive commands to control a first subsystem, and the control circuitry is further configured to repurpose the input interface to provide the one or more selectors.

In some embodiments, the control circuitry is further configured to receive the indication from a keyfob associated with the vehicle. The keyfob includes the one or more selectors, and the control circuitry is further configured to map at least one command for controlling the winch to the one or more selectors.

In some embodiments, the vehicle includes a current sensor configured to determine a current draw of the winch, and the control circuitry is configured to monitor the current draw, deactivate the winch based at least in part on the current draw, or both.

In some embodiments, the present disclosure is directed to a method for controlling a winch system of a vehicle. The method includes receiving an indication to initiate a winch control mode from an input interface, determining status information for the vehicle, and activating one or more selectors of the input interface for receiving input to control the winch based on the status information. In some embodiments, the input interface includes a keyfob associated with the vehicle, and the keyfob includes the one or more selectors. In some such embodiments, the method includes mapping at least one command for controlling the winch to the one or more selectors. In some embodiments, the method includes monitoring a current draw of the winch, and deactivating the winch based at least in part on the current draw. In some embodiments, the input interface is configured to receive commands to control a first subsystem, and the method includes repurposing the input interface to receive the input to control the winch and generate commands for controlling the winch. In some embodiments, the method includes receiving at least one command for controlling the winch, causing the winch motor to wind or unwind a cable, and monitoring the status information to determine whether to remain in the winch control mode.

### BRIEF DESCRIPTION OF THE DRAWINGS

The present disclosure, in accordance with one or more various embodiments, is described in detail with reference to the following figures. The drawings are provided for purposes of illustration only and merely depict typical or example embodiments. These drawings are provided to facilitate an understanding of the concepts disclosed herein and shall not be considered limiting of the breadth, scope, or applicability of these concepts. It should be noted that for clarity and ease of illustration these drawings are not necessarily made to scale.
FIG. 1 shows a side view of an illustrative vehicle having an integrated winch, and a keyfob operated by a user, in accordance with some embodiments of the present disclosure;
FIG. 2 shows a system diagram of an illustrative system for controlling an integrated winch, in accordance with some embodiments of the present disclosure;
FIG. 3 shows a flowchart of an illustrative process for controlling an integrated winch system, in accordance with some embodiments of the present disclosure; and
FIG. 4 shows a flowchart of an illustrative process for managing an integrated winch system, in accordance with some embodiments of the present disclosure.

### DETAILED DESCRIPTION

The present disclosure is directed to winch systems of a vehicle. For example, in some embodiments, the present disclosure is directed to systems and methods that allow for easy user-control of a winch vehicle accessory. The use of an integrated control system (e.g., a singular control device and integrated vehicle user interface) allows the winch accessory to be controlled using an existing interface. To illustrate, a keyfob or other existing interface may be used, repurposed, or otherwise activated to control the winch, using the existing electrical architecture. In some embodiments, the control circuitry implements a "winch mode" where the keyfob buttons, or other switches or selectors of the vehicle, are repurposed for winch control.

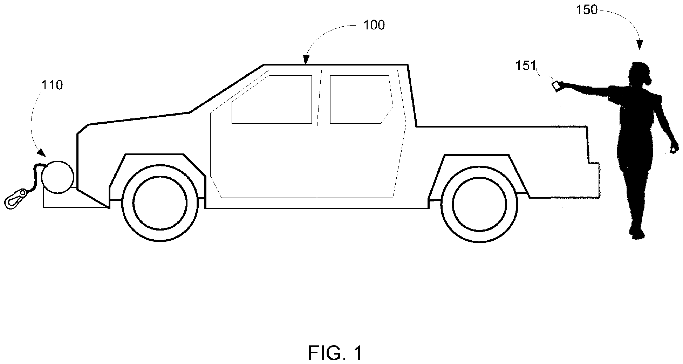

FIG. 1 shows a side view of illustrative vehicle 100 having integrated winch 110, and keyfob 151 operated by user 150, in accordance with some embodiments of the present disclosure. Vehicle 100 is illustrated as a truck in FIG. 1, but the winch system of the present disclosure may be applied to any suitable vehicle such as, for example, an electric vehicle, a sedan, a coupe, a sport utility vehicle (SUV), a crossover, a station wagon, a van, a truck having more than two axles, or any other suitable vehicle.

Keyfob 151 is associated with vehicle 100 and under normal operation, may allow the user to unlock doors and hatches, lock doors and hatches, unlock or lock some doors and hatches, start the vehicle, signal a panic condition, perform any other suitable function, or any combination thereof. Keyfob 151 includes a plurality of buttons or other features for receiving haptic input from a user. For example, in some embodiments, keyfob 151 includes a number of buttons (e.g., two, three, four, or more than four buttons) that each correspond to a function or command. Keyfob 151 may include a battery to provide electrical power, an antenna for transmitting and receiving signals, and control circuitry for converting user selections (e.g., presses of a button) to an electrical signal (e.g., via control circuitry) and then a wireless signal (e.g., via the antenna). Although not illustrated in FIG. 1, user 150 may use a smartphone instead of or in addition to keyfob 151 to transmit information to vehicle 100.

Vehicle 100 includes a control system for controlling the drivetrain (e.g., an engine, a motor, a transmission, a clutch), steering, braking, energy management (e.g., battery management), user interaction, any other suitable function, or any combination thereof. Vehicle 100 further includes a winch controller (e.g., for controlling winch 110) that may be part of, or separate from, the control system. Winch 110 may include a motor and cable spool for pulling or other functions. Winch 100 may be coupled to the electrical system of vehicle 100. For example, vehicle 100 may be an electric vehicle having a battery system, and winch 110 may be electrically coupled to the battery system by control circuitry (e.g., which may include power electronics). Accordingly, user 150 may control winch 110 using keyfob 151 to communicate with a control system of vehicle 100.

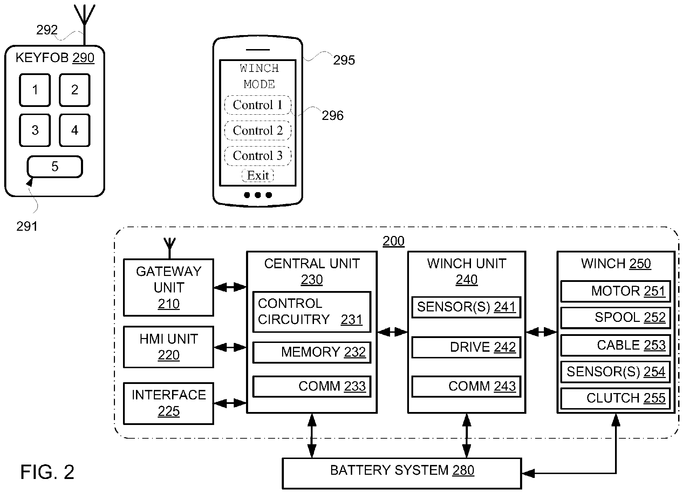

FIG. 2 shows a system diagram of illustrative system 200 for controlling an integrated winch, in accordance with some embodiments of the present disclosure. In an illustrative example, system 200 and battery system 280 may be included as part of a vehicle such as vehicle 100 of FIG. 1. Although illustrated as separate in FIG. 2, any or all of gateway unit 210, HMI unit 220, central unit 230, and winch unit 240 may be combined or modified in accordance with the present disclosure. For example, a control system may include the functionality of gateway unit 210, HMI unit 220, central unit 230, and winch unit 240. System 200, as illustrated, includes gateway unit 210, human-machine interface (HMI) unit 220, interface 225 , central unit 230, winch unit 240, and winch 250. As illustrated, keyfob 290 and user device 295 are configured to communicate with gateway unit 210.

Gateway unit 210 is configured to send and receive wireless information between system 200 and external devices such as, for example, network devices (e.g., a server, a WiFi access point), user devices (e.g., a smart phone), keyfobs (e.g., keyfob 290), any other suitable devices, or any combination thereof. Gateway unit 210 may include an antenna and other control circuitry (e.g., protocol converters, rate converters, signal converters), or any combination thereof. Gateway unit 210 may be configured to access the internet, a local area network, a wide area network, a Bluetooth-enable device, a NFC-enabled device, any other suitable device using any suitable protocol, or any combination thereof. As illustrated, gateway unit 210 receives wireless signals from keyfob 290 (e.g., via antenna 292 thereof).

HMI unit 220 is configured to provide information to a user and receive information from the user. HMI 220 may include, for example, a screen, a touchscreen, a touch pad, a keypad, one or more hard buttons, one or more soft buttons, a microphone, a speaker, any other suitable components, or any combination thereof. For example, in some embodiments, HMI 220 includes all or part of a dashboard, including displays, dials and gauges (e.g., actual or displayed), soft buttons, indicators, lighting, and other suitable features. In some embodiments, HMI 220 is communicatively coupled to central unit 230 via a CANbus. In some embodiments, HMI 220 is communicatively coupled to central unit 230 by one or more cables.

Interface 225 is configured to receive haptic input from a user, provide information to the user, or a combination thereof. For example, interface 225 may include one or more paddle shifters (e.g., arranged on a steering column), one or more auxiliary switches (e.g., for positioning a side mirror, controlling radio/audio, cruise control, HVAC buttons, or any other suitable interface), a keypad, any other suitable existing interface having selectors, or any combination thereof. In some embodiments, interface 225 is repurposed to control winch 250 (e.g., in a winch-control mode). For example, when in winch mode, paddle shifters may be used to provide indications that correspond to winch commands, rather than gear selections. In a further example, when in winch mode, radio preset buttons may be used to provide indications that correspond to winch commands, rather than radio stations. In a further example, when in winch mode, menu select buttons on a steering wheel may be used to provide indications that correspond to winch commands, rather than for navigating a vehicle menu.

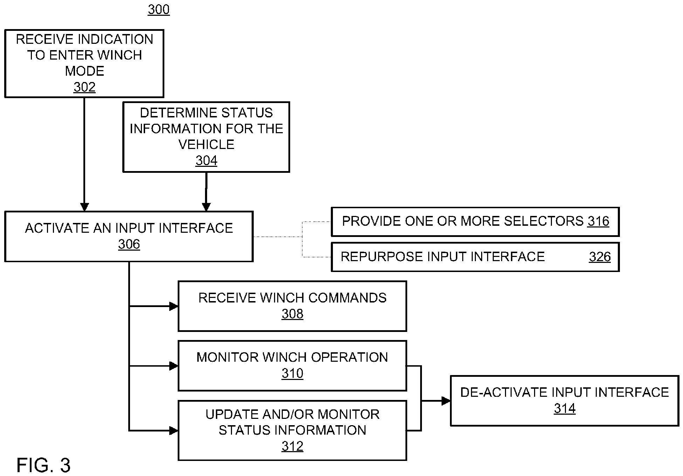

Central unit 230, as illustrated, includes control circuitry 231, memory 232, and communications interface 233 (comm 233). Control circuitry 231 may include a processor, a communications bus, memory, power management circuitry, a power supply, any suitable components, or any combination thereof. Memory 232 may include solid state memory, a hard disk, removable media, any other suitable memory hardware, or any combination thereof. In some embodiments, memory 232 is configured to store computer instructions that, when executed, perform processes 300-400 described in the context of FIGS. 3-4. Comm 233 may include one or more ports, connectors, input/output (I/O) terminals, cables, wires, a printed circuit board, control circuitry, any other suitable components for communicating with other units, devices, or components, or any combination thereof. In some embodiments, central unit 230 is configured to control a drivetrain (e.g., control an engine, electric motor, transmission, brake), control or manage a battery system (e.g., battery system 280), determine status information of the vehicle or components thereof, communicate with other units (e.g., gateway unit 210, HMI unit 220, and winch unit 240), perform any other suitable actions, or any combination thereof.

Winch unit 240, as illustrated, includes one or more sensors 241, drive 242, and communications interface (comm) 243. Sensor(s) 241 may include voltage sensors, current sensors, temperature sensors, impedance sensors, any other suitable sensors, or any combination thereof. In some embodiments, sensor(s) 241 are configured to sense electrical parameters corresponding to operation of winch 250 such as, for example, current flow, voltage or voltage drop, temperature or change thereof, resistance or change thereof, capacitance or change thereof, inductance or change thereof, any other suitable property, or any combination thereof. Sensor(s) 241 may include loop-type current transformer sensors, shunts or precision resistors, thermocouples, thermopiles, resistance temperature detectors (RTDs), thermistors, any other suitable components or hardware, or any combination thereof. For example, sensor(s) 241 may include a current sensor configured to sense current in an AC line (e.g., a line or neutral) or a line of a DC bus associated with a motor of winch 250. In a further example, sensor(s) 241 may include a temperature sensor configured to sense a temperature of an enclosure, a power electronics device (e.g., a transistor or diode of a motor drive), a cooling fluid, a temperature indicative of a component (e.g., wherein the sensor is not directly coupled to a component), a temperature of any other suitable component or area, or any combination thereof. Drive 242 may include a motor drive, having power electronics and a controller, for providing electrical power to winch 250 (e.g., from battery system 280). For example, winch unit 240 may be configured to control current flow to motor 251. In some embodiments, drive 242, or winch 250, includes at least one electrical disconnect configured to connect and disconnect winch motor 251 from battery system 280. In some such embodiments, the control circuitry (e.g., central unit 230, or winch unit 240) is configured to control the at least one electrical disconnect. Communications interface 243 (comm 243) may include one or more ports, connectors, cables, wires, input/output (I/O) terminals, a printed circuit board, control circuitry, any other suitable components for communicating with other units, devices, or components, or any combination thereof. For example, comm 243 may be configured to interface to comm 233 of central unit 230, gateway unit 210, HMI unit 220, controls of winch 250, sensor(s) 254 of winch 250, any other suitable device or components, or any combination thereof.

Winch 250, as illustrated, includes motor 251, spool 252, cable 253, one or more sensors 254, and clutch 255. Motor 251 may include, for example, a DC motor (e.g., permanent magnet motor, brushed or brushless motor, wound stator), an AC motor (e.g., an induction motor), any other suitable motor having any suitable number of poles and phases, or any combination thereof. For example, motor 251 may include a permanent magnet DC motor configured to operate at 12 VDC. Clutch 255 is configured to couple and de-couple motor 251 from spool 252. For example, in some embodiments, clutch 255 is controlled by winch unit 240, central unit 230, or both, which may provide control signals for engaging or disengaging clutch 255. In an illustrative example, clutch 255 may be disengaged to allow free-spooling of spool 252, or engaged to retract cable 253. Spool 252 is coupled to motor 251, optionally via a gearset to provide gear reduction, and rotates with a motor shaft of motor 251. Cable 253 is wound on spool 252 and is used to pull or tow vehicles or other equipment, or otherwise undergo tension to apply a force on the vehicle. Sensor(s) 254 may include voltage sensors, current sensors, temperature sensors, impedance sensors, position sensors (e.g., encoders for determining spool position), torque sensors, any other suitable sensors, or any combination thereof. Winch 250 may be integrated into the body and/or the frame of the vehicle, or may be affixed to the vehicle separately, although the electric power and controls for winch 250 are coupled to winch unit 240 of the vehicle. In some embodiments, winch 250 may include power electronics (e.g., a motor drive), and accordingly may be coupled to battery system 280 and be configured to receive control signals from winch unit 240 (e.g., analog signals, PWM signals, digital signals, messages).

Battery system 280 may include, for example, a vehicle battery pack that may include a plurality of battery cells. For example, subsets of the battery cells may be coupled in parallel, with the subsets coupled in series with each other to form a DC bus (e.g., to drive one or more electric drive motors, auxiliaries, or other electrical loads). The vehicle may be, but need not be, an electrical vehicle. For example, battery system 280 may be configured to power winch 250 and auxiliaries, while an internal combustion engine powers the drivetrain. Battery system 280 may include battery cells, busbars, current collectors, enclosures, DC bus cables or otherwise conductors, contactors, switches, sensors and instrumentation, any other suitable components, or any combination thereof.

Keyfob 290, which may be similar to keyfob 151 of FIG. 1, includes five buttons 291, as illustrated (e.g., labeled as 1-5 for illustrative purposes). Each of buttons 291 may correspond to a particular function associated with the vehicle. When any of buttons 291 is pressed, control circuitry of keyfob 290 may receive a signal that corresponds to the button press (e.g., from an electrical switch or sensor coupled to the button), and generate a message or otherwise signal for transmitting via antenna 292 to a communications interface of system 200 (e.g., gateway unit 210 or, in some embodiments, comm 233).

User device 295 may include a smart phone, laptop, tablet, computer, any other suitable mobile or user device, or any combination thereof. As illustrated, user device 295 includes three soft buttons 296 (e.g., labeled as Control 1-3 for illustrative purposes). Each of soft buttons 296 may correspond to a particular function associated with the vehicle, the winch or both. As illustrated, user device 295 is in winch mode, and soft buttons 296 are configured to control winch 250. When any of soft buttons 296 is selected, control circuitry of user device 295 may receive a signal that corresponds to the button press (e.g., from an electrical switch or sensor coupled to the button), and generate a message or otherwise signal for transmitting to a communications interface of system 200 (e.g., gateway unit 210 or, in some embodiments, comm 233). In an illustrative example, the user may select winch mode using an application implemented on user device 295, and control winch 250 via central unit 230 and winch unit 240. In a further illustrative example, the application may be implemented on user device 295, and may interface with a vehicle application for entering/exiting winch mode, determining commands mapping, displaying winch information (e.g., status, current command, operating parameters), or other functions.

In some embodiments, system 200 receives messages or otherwise signals from keyfob 290 (e.g., RF signals, NFC signals, any other suitable types of signals), and maps the input to one or more commands. For example, each of buttons 291 may correspond to a particular command of system 200 (e.g., unlock doors, lock doors, etc.). In some embodiments, the input is mapped to a corresponding command by gateway unit 210, which then transmits command information (e.g., a message, a signal) to central unit 230. In some embodiments, the input is received at gateway unit 210 which then transmits the input to central unit 230 (e.g., as any suitable signal or message), which maps the input to a corresponding command.

In an illustrative example, a vehicle (e.g., vehicle 100 of FIG. 1) may include system 200 and battery system 200, which is configured to provide electric power to the vehicle and subsystems of the vehicle. The vehicle may include winch 250, having winch motor 251, configured to extend and retract cable 253 (e.g., wound on spool 252). The vehicle includes control circuitry (e.g., system 200, central unit 230 thereof, or winch unit 240 thereof) coupled to winch 250 and battery system 280. The control circuity may be configured to control operation of the vehicle, receive an indication to initiate a winch control mode, determine status information for the vehicle, and activate one or more selectors for receiving input to control winch 250 based on the status information. The status information may include, for example, a gear selection of the vehicle, a security status of the vehicle, a capacity status of the battery system, authorization information, any other suitable information, or any combination thereof. In some embodiments, the control circuitry (e.g., system 200, central unit 230 thereof, or gateway 210 thereof) is further configured to receive the indication from keyfob 290, which is associated with the vehicle. In some such embodiments, the control circuitry is further configured to map, or re-map, at least one command for controlling winch 250 to the one or more selectors (e.g., buttons 291). The vehicle may include a current sensor (e.g., of sensor(s) 241 or sensor(s) 254) that is configured to determine a current draw of winch 250. For example, the control circuitry (e.g., system 200, central unit 230 thereof, or winch unit 240 thereof) may be configured to monitor the current draw indicated by the current sensor. In a further example, the control circuitry may be configured to deactivate winch 250 based at least in part on the current draw (e.g., if the current draw exceeds a threshold). In some embodiments, the vehicle includes an input interface (e.g., HMI unit 220) configured to receive commands (e.g., from a user or user device) to control a first subsystem. In some such embodiments, the control circuitry (e.g., system 200, central unit 230 thereof, HMI unit 220 thereof, or gateway 210 thereof) is further configured to repurpose the input interface to provide the one or more selectors (e.g. soft buttons on a touchscreen that the user may select or hard buttons that the user may operate).

In an illustrative example, a vehicle may include control circuitry that includes a vehicle control unit (e.g., central unit 230) configured to control operation of a drivetrain of the vehicle, a winch control unit (e.g., winch unit 240) configured to control operation of a winch motor (e.g., motor 251), a gateway (e.g., gateway unit 210) configured to receive input signals from a keyfob (e.g., keyfob 290) associated with the vehicle, and a user interface (e.g., HMI unit 220) configured to provide graphical information and receive haptic input (e.g., to and from a user).

FIG. 3 shows a flowchart of illustrative process 300 for controlling an integrated winch system, in accordance with some embodiments of the present disclosure. Illustrative process 300 may be implement by system 200 and keyfob 290 of FIG. 2. Illustrative steps 302, 304, 306, 308, 310, and 312 may be performed by any suitable components or units illustrated in FIG. 2, for example.

At step 302, the system receives an indication to enter winch mode. The indication of step 302 may be provided in any suitable manner including, for example, pressing a particular sequence of buttons of a keyfob (e.g., "1," "2," "1," "2" or any other suitable sequence of any suitable length, pressing a simultaneous combination of buttons of a keyfob (e.g., pressing "1" and "2" together or any other suitable combination of any suitable number of buttons), pressing a dedicated mode selection button of a keyfob, selecting a soft button on a touchscreen (e.g., of a console of the vehicle as part of HMI unit 220, of a smartphone), providing a voice command (e.g., to a microphone of the vehicle as part of HMI unit 220, or to a smartphone), pressing a hard button or soft button on a winch of a vehicle (e.g., a button of winch 250), providing any other suitable indication, or any combination thereof. In some embodiments, a separate keyfob from that used for normal operation is used to provide commands for winch mode. System 200 (e.g., gateway unit 210, central unit 230, or winch unit 240 thereof) may receive the indication and determine whether to enter winch mode. System 200 may identify status information, and based the determination of whether to enter winch mode on the status information.

At step 304, the system determines status information for the vehicle. The system (e.g., system 200, or central unit 230 thereof) may determine any suitable status information to determine whether to enter winch mode and whether to exit winch mode. Table 1 illustrates examples of status information. Status information may include a vehicle drive status, battery system status, security status, location status, authorization status, electrical load status, a winch status, any other suitable information, or any combination thereof.

**Table 1 - Illustrative status information affecting winch mode.**

| | Normal Function | Examples |
|---|---|---|
| 1 | Vehicle Drive Status | Gear (P, R, N, D), E-brake on/off |
| 2 | Battery System Status | State of Charge, Fault, Extender |
| 3 | Security Status | Vehicle locked/unlocked, Alarm |
| 4 | Location Status | Location presets, Restrictions |
| 5 | Authorization Status | User identity and profile information |
| 6 | Electrical Load Status | Current draw, Auxiliary loads |
| 7 | Winch Status | Locked/unlocked, Fault, Online/Offline |

Vehicle drive status may include, for example, a gear position (e.g., Park, Reverse, Neutral, Drive), a brake status (e.g., parking brake engaged or disengaged), speed (e.g., vehicle moving or stopped), start/stop status (e.g., allowing/preventing the vehicle to be driven), any other status indicative of the vehicles motion or ability to move, or any combination thereof. Battery system status may include, for example, a state of charge, a remaining cycle life, an estimate of range, any other information indicative of battery capacity or stored energy, or any combination thereof. Security status may include, for example, whether the vehicle has been unlocked or locked, whether an alarm or panic button has been activated, whether a security fault has been reset or cleared, any other suitable information indicative of whether the vehicle is secured or accessible, or any combination thereof. Location status may include, for example, a location of the vehicle (e.g., based on GPS), predetermined restrictions on location for winch usage (e.g., avoid winch mode while located on a freeway or city downtown, or based on user settings), any other suitable information indicative of where the vehicle is located, or any combination thereof. Authorization status may include, for example, a user identity (e.g., based on keyfob identification, user-inputted identifiers), user profile information (e.g., based on user preferences, usage history, user privileges), any other information indicative of whether a user has authority to operate the vehicle and/or winch, or any combination thereof. Electrical load status may include, for example, a current draw of one or more components (e.g., auxiliaries, a drivetrain component, winch motor 251, or other loads), listing of activated auxiliaries (e.g., flag values for which auxiliary systems are operating), operating temperature of electrical components, any other suitable information indicative of an electrical load or potential load, or any combination thereof. Winch status may include, for example, an operating mode of the winch (e.g., ready, locked, unlocked, faulted, online, offline), a switch position of the winch (e.g., on/off, locked, neutral), any other suitable information indicative of the state of the winch (e.g., winch 250), or any combination thereof.

At step 306, the system activates an input interface, which may include, for example, repurposing an input interface (e.g., step 326), providing one or more selectors (e.g., step 316), or both. The input interface may include buttons of a keyfob, options provided on a display (e.g., a touchscreen of a console), exterior buttons of a vehicle (e.g., a security keypad, latch switch or other external switch), interior button of a vehicle (e.g., window controls, mirror controls, buttons arranged on a console or dashboard, buttons associated with a radio), a microphone and speech recognition module (e.g., of HMI 220, for parsing voice commands), any other suitable input interface, or any combination thereof. In some embodiments, the input interface is configured for receiving a first set of commands, or indications that correspond to a first set of commands. Step 306 may include, for example, determining a second set of commands, or indications that correspond to the second set of commands, wherein the second set of commands correspond to the winch system. In some embodiments, the system need not repurpose an input interface but rather activate or otherwise provide an input interface at step 306. For example, a dedicated winch interface may be provided to the user without repurposing or replacing an existing input interface (e.g., set of buttons of the vehicle, display screen with selectable options, keyfob buttons). In some embodiments, the system prevents operation of the winch, or otherwise does not activate the input interface, when not in winch mode.

In some embodiments, the input interface includes a keyfob (e.g., keyfob 290 of FIG. 2) having a plurality of buttons (e.g., buttons 291 of FIG. 2). In some embodiments, the system (e.g., system 200, gateway unit 210 thereof, central unit 230 thereof, or winch unit 240 thereof) remaps the commands that are associated with the keyfob (e.g., repurposes buttons 291). At step 306, when the system (e.g., system 200 of central unit 230 thereof) enters winch mode, the mapped commands may be changed from the original mapping (e.g., in normal operation) to a modified mapping (e.g., winch mode). Table 2 illustrates an example of original and modified mappings of buttons 291 of keyfob 290. In an illustrative example, referencing Table 1, a user may unlock a vehicle (e.g., which includes system 200) using a keyfob (e.g., pressing button "1" of buttons 291 of keyfob 290). The user may then indicate to the system that winch mode is selected. The system may, in response to the indication, enter winch mode and map each of buttons 291 to winch functions. Winch functions may include, for example, extend cable (e.g., release cable, or actively unwind cable), stop cable (e.g., lock cable, stop motor), retrieve cable (e.g., re-spool cable), hold cable (e.g., lock cable in place, apply a predetermined force/tension on the cable), any other suitable winch function, or any combination thereof.

**Table 2 - Illustrative functions mapping between normal mode and winch mode.**

| Button Number | Normal Function | Winch Function |
|---|---|---|
| 1 | Unlock doors | Extend cable |
| 2 | Lock doors | Stop cable |
| 3 | Open Trunk/hatch | Retrieve cable |
| 4 | Alarm | - |
| 5 | Start vehicle | Hold cable |

At step 308, the system receives one or more winch commands. The system may receive any suitable winch commands using the activated input interface (e.g., a repurposed input interface, or provided selectors) of step 306. To illustrate, the system may receive one or more input signals (e.g., from pressing any of buttons 291) corresponding to any or all of the winch functions of Table 2 (e.g., extend, stop cable, retrieve cable, hold cable). For example, referencing FIG. 2, a user may press a button of buttons 291 of keyfob 290, and an indication of the button-press may be transmitted to gateway unit 210 (e.g., by antenna 292). Gateway 210 then can map the indication to the corresponding winch command and transmit an indication of the winch command to central unit 230, or gateway 210 may transmit the indication of the button-press to central unit 230 and central unit 230 may map the indication to the winch command. Central unit 230 then may transfer an indication of the winch command (e.g., a signal) to winch unit 240 for controlling winch 250.

At step 310, the system monitors winch operation. In some embodiments, step 310 includes monitoring one or more sensor signals. For example, referencing FIG. 2, the system may monitor one or more sensor signals from sensor(s) 241, sensor(s) 254, any other suitable sensor, or any combination thereof. For example, the system may monitor current draw by the winch to determine whether the current exceeds a threshold (e.g., to prevent overheating, damage, or battery draw). For example, in some circumstances, the winch may exceed an operating range (e.g., an over-current, a force/toque over-load, an over-temperature), fail or experience a fault, lie dormant for a predetermined time duration, or otherwise experience an event. The system may monitor such information and determine whether to exit winch mode. For example, if the winch fails, experiences an excursion from an operating range, or remains unused (e.g., no commands received in a predetermined time period), the system may proceed to step 314 and revert the input interface (e.g., to the interface prior to step 306, for normal operation). In some embodiments, step 310 may be combined with step 312, wherein status information includes information corresponding to winch operation (e.g., current draw, temperature).

At step 312, the system updates status information, monitors status information, or both. In some embodiments, the system updates, monitors, or both vehicle drive status, battery system status, security status, location status, authorization status, electrical load status, a winch status, any other suitable information, or any combination thereof (e.g., any of the illustrative status information of Table 1). For example, the system may monitor status information and retrieve reference information. The system may then compare the monitored status information to the reference information (e.g., thresholds, patterns of usage, predetermined operating ranges), and determine whether to continue in winch control mode or exit winch control mode (e.g., and return to a normal operating mode). Step 314 includes deactivating the input interface, which may include, for example, reverting the input interface to the original mapping, deactivating or otherwise removing selectors for controlling the winch, or a combination thereof. In some embodiments, step 314 may include repurposing in the input interface again (e.g., remapping the selectors and/or buttons). In some embodiments, step 314 may include deactivating the winch such that current cannot be provided to the winch motor.

In an illustrative example, a vehicle may originally be parked, off, and non-moving. A user may use a keyfob to unlock the vehicle, and thus deactivate the alarm. The user then may hold one or more buttons of the keyfob for a predetermined time (e.g., a number of seconds) to provide an indication to the computer system (e.g., control circuitry) of the vehicle (e.g., a gateway thereof) to enter winch mode. The computer system receives the indication, identifies the indication as a request to enter winch control mode, and performs a status check. The computer system retrieves status information to ensure the vehicle is unlocked, the vehicle is not moving, the vehicle in a particular gear such as park (e.g., although the preferred gear may differ based on how the winch is used), a parking brake is on, and that the indication is received from a keyfob having authorization to activate winch mode. If the computer system determines that the status information is compatible with winch mode, the computer system may remap the commands that are associated with buttons of the keyfob. In some embodiments, the vehicle may cause an audible or visible return indication to alert the user that winch mode has been entered. For example, when entering winch mode, the computer system may cause the headlights to flash (or other lights), the horn to beep, the alarm to beep, any other suitable indication, or any combination thereof. Once winch mode is activated, the user may use the keyfob to control the winch to release cable, retract the cable, or other winch function. If the winch fails or over-currents, the computer system may cease winch mode and may alert the user that winch mode has been exited. When the user has finished using the winch, the user can hold a button of the keyfob for a predetermined time period (e.g., the same indication to enter winch mode), and the computer system, in response, exits winch mode. The computer system then maps the keyfob buttons back to the original commands (e.g., unlock, lock, open trunk, etc.), and the vehicle is under normal operation.

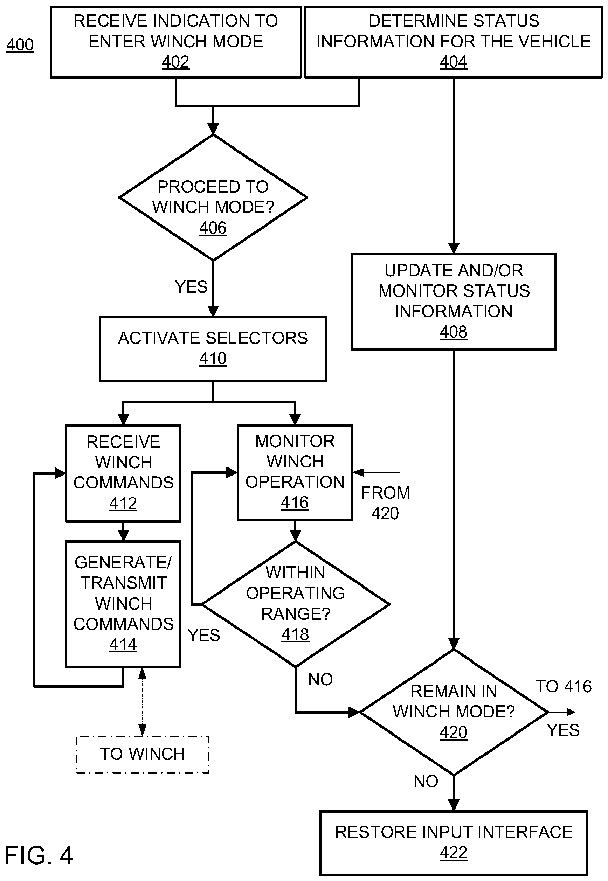

FIG. 4 shows a flowchart of illustrative process 400 for managing an integrated winch system, in accordance with some embodiments of the present disclosure. Illustrative process 400, or any steps thereof, may be implement by system 200 and keyfob 290 of FIG. 2. In some embodiments, process 400 is an example of process 300 of FIG. 3.

At step 402, the system receives an indication to enter winch mode. The indication may arise from a button press of a keyfob, a command from a user device (e.g., a smartphone), a button on a vehicle console or dashboard, a soft button on a user interface of the vehicle, a voice command, any other suitable indication, or any combination thereof.

At step 404, the system determines status information for the vehicle. The system may retrieve, for example, any of the status information listed in Table 1, any other suitable information, or any combination thereof. The system determines status information to, for example, prevent damage to the system and ensure predictable operation of the winch.

At step 406, the system determines whether to proceed to winch mode. Based on the status information determined at step 404, the system determines whether winch mode can be activated. In an illustrative example, if the vehicle is locked and the alarm is activated, the system may determine that winch mode is inaccessible.

At step 408, the system updates the status information, monitors the status information, or both. While in winch mode, if the status information is updated and a condition has changed, the system may determine whether to remain in winch mode (e.g., at step 420).

At step 410, the system activates one or more selectors. The system may, for example, remap buttons of the keyfob, repurpose an input interface (e.g., from initially controlling a first system to controlling the winch), re-generate a display screen on an input interface of the vehicle (e.g., display a new set of selectors that correspond to commands for controlling the winch), remap a keypad of the vehicle, or otherwise provide an input interface for the user to control the winch.

At step 412, the system receives one or more winch commands. The user may interact with the input interface by inputting commands or indications (e.g., button presses). At step 414, the system generates one or more winch commands, receives one or more winch commands, or both. During steps 412 and 414, the winch may operate in any suitable manner such as, for example, releasing a cable, retracting a cable, any other suitable operation, or any combination thereof.

At step 416, the system monitors winch operation. At step 416, the system may monitor current draw of a motor of the winch, a temperature of an electronic components, any other information indicative of winch operation, or any combination thereof. At step 418, the system the system determines whether the winch is operating within an operating range or in an acceptable operating state. An operating range may include, for example, a temperature range, a current draw range, a time duration, a fault condition (e.g., a blown fuse or contactor, a short, or other fault), any other suitable operating limitations, or any combination thereof. In some embodiments, the system may remain in winch mode even if the winch has operated outside of the operating range, and accordingly may return to step 416.

At step 420, the system determines whether to remain in winch mode. If, for example, the winch is operating outside of the operating range or state, the system may determine to exit winch mode. In some embodiments, if the status information changes such that winch mode is no longer appropriate, the system may determine to exit winch mode. If the system determines not to remain in winch mode, at step 422, the system deactivates the input interface. For example, at step 422, the system may restore the input interface to correspond to normal operation rather than winch mode. To illustrate, in the context of a keyfob, at step 422 the system may revert the input-command mapping associated with buttons of the keyfob to the original scheme (e.g., lock and unlock doors) rather than the scheme for winch control. The system then may implement normal operation and may optionally deactivate the winch system.

The foregoing is merely illustrative of the principles of this disclosure, and various modifications may be made by those skilled in the art without departing from the scope of this disclosure. The above described embodiments are presented for purposes of illustration and not of limitation.

## Claims

1. A vehicle comprising:
a battery system configured to provide electric power to the vehicle and subsystems of the vehicle;
a winch (110) comprising a winch motor (251) and configured to extend and retract a cable; and
control circuitry coupled to the winch (110) and the battery system, and configured to:
control operation of the vehicle,
receive an indication to initiate a winch control mode,
determine status information for the vehicle, and
activate one or more selectors of an input interface for receiving input to control the winch (110) based on the status information.

2. The vehicle of claim 1, wherein the control circuitry is further configured to receive the indication from a keyfob (151) associated with the vehicle and/or wherein the input interface comprises a keyfob (151), wherein the keyfob (151) comprises the one or more selectors, wherein the control circuitry is further configured to map at least one command for controlling the winch (110) to the one or more selectors.

3. The vehicle of claim 2, where one or more selectors correspond to a first command for controlling the vehicle, and wherein the control circuitry is configured to map the at least one command for controlling the winch (110) by:
unlinking the one or more selectors from the first command, and
linking the one or more selectors with the at least one command for controlling the winch.

4. The vehicle of any preceding claim, further comprising a current sensor coupled to the control circuitry and configured to:
sense a current draw of the winch (110);
monitor the current draw; and
deactivate the winch (110) based at least in part on the current draw and/or further comprising at least one electrical disconnect configured to connect and disconnect the winch motor (251) from the battery system, wherein the control circuitry is configured to control the at least one electrical disconnect.

5. The vehicle of any preceding claim, wherein:
the input interface is initially configured to receive commands to control a first subsystem; and
the control circuitry is further configured to, in response to receiving the indication, activate the one or more selectors by repurposing the input interface to control the winch instead of the first subsystem and/or wherein the control circuitry comprises a motor drive configured to control current flow to the winch motor (251).

6. The vehicle of any preceding claim, wherein the status information comprises at least one of a gear selection of the vehicle, a security status of the vehicle, a capacity status of the battery system, or authorization information .

7. The vehicle of any preceding claim, wherein the control circuitry comprises:
a vehicle control unit configured to control operation of a drivetrain of the vehicle;
a winch control unit configured to control operation of the winch motor (251); and
a gateway (210) configured to receive signals from a keyfob (151) associated with the vehicle.

8. A system for controlling a winch system of a vehicle, the system comprising:
a winch (110) comprising a winch motor (251) and configured to extend and retract a cable;
an input interface configured to receive user input; and
control circuitry coupled to the winch (110), the input interface, and a power supply, and configured to:
control operation of the vehicle,
receive an indication to initiate a winch control mode,
determine status information for the vehicle, and
activate one or more selectors of the input interface for receiving input to control the winch (110) based on the status information.

9. The system of claim 8, wherein:
the control circuitry is further configured to receive the indication from a keyfob (151) associated with the vehicle;
the keyfob (151) comprises the one or more selectors; and
the control circuitry is further configured to map at least one command for controlling the winch (110) to the one or more selectors and/or
wherein the input interface is configured to receive a first indication at the one or more selectors and, in response, generate a first command to control a first subsystem; and
the control circuitry is further configured to repurpose the input interface to receive the input to the control the winch (110) at the one or more selectors and, in response to the input, generate a second command to control the winch (110) and/or wherein the control circuitry comprises a motor drive configured to control current flow to the winch motor (251).

10. The system of claim 9, further comprising a current sensor configured to determine a current draw of the winch (110), wherein the control circuitry is configured to:
monitor the current draw; and
deactivate the winch (110) based at least in part on the current draw.

11. A method for controlling a winch system of a vehicle, the method comprising:
receiving an indication, at control circuitry, to initiate a winch control mode from an input interface;
determining, using the control circuity, status information for the vehicle; and
activating one or more selectors of the input interface for receiving input to control the winch (110) based on the status information.

12. The method of claim 11, wherein the input interface comprises a keyfob (151) associated with the vehicle, wherein the keyfob (151) comprises the one or more selectors, the method further comprising:
mapping at least one command for controlling the winch (110) to the one or more selectors.

13. The method of claim 12, further comprising:
monitoring a current draw of the winch (100); and
deactivating the winch (110) based at least in part on the current draw.

14. The method of claim 13, wherein the input interface is configured to receive a first indication at the one or more selectors and, in response to the first indication, generate a first command to control a first subsystem; and
repurpose the input interface to receive the input to control the winch (110) at the one or more selectors and, in response to the input, generate a second command to control the winch (110).

15. The method of claim 14, further comprising:
receiving at least one command for controlling the winch (110);
causing the winch motor (251) to wind or unwind a cable; and
monitoring the status information to determine whether to remain in the winch control mode.
